# EUROPÄISCHE PATENTSCHRIFT

(11) **EP 4 566 795 B1**
(45) Veröffentlichungstag und Bekanntmachung des Hinweises auf die Patenterteilung: **16.09.2026**
(21) Anmeldenummer: 24218055.2
(22) Anmeldetag: 06.12.2024
(51) Int. Cl.: B29C 49/78, B29C 49/64, B29C 49/00, B29C 49/06, B29C 49/36, B29C 49/42, B29C 49/46, B29K 67/00, B29L 31/00

(54) **VERFAHREN UND VORRICHTUNG ZUM HERSTELLEN VON KUNSTSTOFFBEHÄLTNISSEN**
METHOD AND DEVICE FOR PRODUCING PLASTIC CONTAINERS
PROCÉDÉ ET DISPOSITIF DE FABRICATION DE RÉCIPIENTS EN MATIÈRE PLASTIQUE

(30) Priorität: 08.12.2023 DE 102023134377
(43) Veröffentlichungstag der Anmeldung: 11.06.2025
(73) Patentinhaber: Krones AG, 93073 Neutraubling (DE)
(72) Erfinder: Jansen, Stefan, 93073 Neutraubling (DE); Bock, Thomas, 93073 Neutraubling (DE)
(74) Vertreter: Hannke Bittner & Partner mbB Regensburg

(56) Entgegenhaltungen:
- WO-A1-2011/046047
- DE-A1- 102018 130 639
- US-A1- 2019 047 206

## Beschreibung

Die vorliegende Erfindung bezieht sich auf eine Vorrichtung und ein Verfahren zum Herstellen von Kunststoffbehältnissen wie insbesondere aber nicht ausschließlich Getränkeflaschen. Gattungsgemäße Vorrichtungen und Verfahren sind in den Patentschriften DE102018130639A1, US2019/047206A1 und WO2011/046047A1 beschrieben.

Aus dem Stand der Technik ist es seit langem bekannt, dass Kunststoffvorformlinge erwärmt werden und anschließend diese Kunststoffvorformlinge mittels Umformungseinrichtungen wie beispielsweise Streckblasmaschinen zu den Kunststoffbehältnissen und insbesondere Kunststoffflaschen umgeformt und insbesondere expandiert werden. Anschließend werden gefertigten Behältnisse befüllt und mit einem Verschluss versehen.

Ein wesentliches Element dieser Kunststoffvorformlinge ist der sogenannte Tragring oder Neckring. Dieser dient insbesondere dem Transport der Kunststoffvorformlinge, aber auch dem Transport der daraus gefertigten Kunststoffflaschen.

Dieser Tragring ist in einem Bereich der Mündung der Kunststoffvorformlinge angeordnet. Bei der Herstellung ist es üblich, dass zwar ein Grundkörper der Kunststoffvorformlinge erwärmt wird, nicht aber der Gewindebereich, auf den später ein Verschluss aufzusetzen ist. Entsprechend ist auch der Tragring bei der Herstellung der Kunststoffvorformlinge ein kritisches Element. Falls dieser verformt wird, wird ein Verschließen der Kunststoffbehältnisse erschwert oder es ist teilweise nicht mehr möglich.

Teilweise ist im Stand der Technik auch bekannt, diesen Tragring als Referenzebene bei einer Verschlussinspektion zu verwenden, beispielsweise um den Hochsitz oder Schiefsitz eines an dem Behältnis angeordneten Verschlusses zu bewerten.

Damit wird nur auf eine etwaige Verschlechterung der Qualität reagiert, es werden jedoch keine präventiven Maßnahmen ergriffen, um einer solchen Verschlechterung vorzubeugen oder entgegenzuwirken.

Daher tritt im Stand der Technik teilweise das Problem auf, dass bereits Behältnisse mit einer verschlechterten Qualität produziert wurden, bevor eine Regelung etwa einer Blasmaschine oder eines Heiztunnels bzw. allgemein einer Erwärmungseinrichtung darauf reagiert.

Ist die Temperatur der Kunststoffvorformlinge zu hoch, dann kann es dazu kommen, dass eine Umformungseinrichtung wie beispielsweise ein Streckblasmaschine den Hals des Behältnisses verformt. So kann es beispielsweise dazu kommen, dass der besagte Tragring nach oben durchgebogen wird (was beispielsweise infolge des Aufsetzens einer Blasdüse passieren kann).

Daneben verschwindet immer mehr der Einzug unter den Tragflächen (des Tragrings), mit dem ein Aufsteigen des Behältnisses verhindert werden soll, wenn es von einer unten greifenden Klammer gehalten wird.

Wenn der Tragring nach oben gebogen wird, dann kann es passieren, dass die Verschlüsse beim Verschließen an dem Tragring aufstehen. In der Folge werden diese gestaucht bzw. sie verwinden sich, was wiederum dazu führt, dass die Verschlussinspektion einen Schiefsitz des Verschlusses bemängelt.

Der vorliegenden Erfindung liegt die Aufgabe zugrunde, derartige Vorrichtungen und Verfahren im Hinblick auf die Fehleranfälligkeit zu verbessern. Daneben liegt der vorliegenden Erfindung die Aufgabe zugrunde, eine Vorrichtung und ein Verfahren zur Verfügung zu stellen, welche eine schnellere Reaktion auf auftretende Fehler oder auch eine proaktive Korrektur ermöglichen.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Herstellen von Kunststoffbehältnissen werden Kunststoffvorformlinge entlang eines vorgegebenen Transportfahrrads transportiert, wobei diese Kunststoffvorformlinge einen Grundkörper, eine Mündung und einen Tragring aufweisen und mittels wenigstens einer Erwärmungseinrichtung die Grundkörper der Kunststoffvorformlinge erwärmt werden und anschließend die erwärmten Kunststoffvorformlinge zu einer Umformungseinrichtung zum Umformen von Kunststoffvorformlingen zur Kunststoffbehältnissen transportiert werden und die Kunststoffvorformlinge durch Beaufschlagung mit einem fließfähigen und insbesondere gasförmigen Medium zu den Kunststoffbehältnissen umgeformt werden.

Erfindungsgemäß wird mittels einer Inspektionseinrichtung wenigstens ein Wert ermittelt, der für wenigstens eine physikalische und insbesondere geometrische Eigenschaft eines Tragrings eines Kunststoffvorformlings und/oder eines Kunststoffbehältnisses (insbesondere eines aus einem Kunststoffvorformling gefertigten Kunststoffbehältnisses) charakteristisch ist und unter Berücksichtigung dieses Werts wird wenigstens ein Behandlungsparameter der Erwärmungseinrichtung und/oder der Umformungseinrichtung gesteuert.

So ist es möglich, dass beispielsweise anhand der (relativ) gemessenen Verschlusshöhe die (durch den Heizvorgang sich ergebende) Qualität der geblasenen Behältnisse beurteilt wird und der Heiz- und/oder Blasprozess entsprechend angepasst wird.

Bei einem bevorzugten Verfahren transportiert eine Transporteinrichtung die Kunststoffvorformlinge von der Erwärmungseinrichtung zu der Umformungseinrichtung. Besonders bevorzugt handelt es sich bei dieser Transporteinrichtung um einen oder mehrere Transportsterne, welche die Kunststoffvorformlinge transportieren. Besonders bevorzugt werden die Kunststoffvorformlinge wenigstens abschnittsweise auf kreissegmentförmigen Transportpfaden transportiert.

Besonders bevorzugt wird während des Transports der Kunststoffvorformlinge von der Erwärmungseinrichtung zu der Umformungseinrichtung eine Teilung und/oder ein Abstand von aufeinanderfolgenden Kunststoffvorformlingen verändert. Besonders bevorzugt wird daher ein Teilungsverzug vorgenommen.

Besonders bevorzugt werden die Kunststoffvorformlinge durch Beaufschlagung mit einem gasförmigen Medium und insbesondere mit Blasluft zu den Kunststoffbehältnissen umgeformt.

Bei einer weiteren bevorzugten Ausführungsform werden die Kunststoffvorformlinge in ihrer Längsrichtung gedehnt. Zu diesem Zweck werden bevorzugt stangenartige Körper, sogenannte Reckstangen, in die Kunststoffvorformlinge eingeführt, um diese in deren Längsrichtung zu dehnen.

Besonders bevorzugt werden diese Kunststoffvorformlinge über ihre Mündung mit einem fließfähigen und insbesondere gasförmigen Medium, wie insbesondere aber nicht ausschließlich Blasluft, beaufschlagt. Bevorzugt wird eine Beaufschlagungseinrichtung, insbesondere eine Blasdüse an einen Mündungsbereich der Kunststoffvorformlinge oder den Tragring oder eine Blasform, innerhalb derer der Kunststoffvorformling sich befindet, angesetzt, um diese Kunststoffvorformlinge mit dem gasförmigen Medium zu beaufschlagen. Bevorzugt wird dabei durch diese Beaufschlagungseinrichtung in der Längsrichtung der Kunststoffvorformlinge ein Druck auf diese ausgeübt.

Besonders bevorzugt werden die in der Umformungseinrichtung bzw. in den einzelnen Umformungsstationen dieser Umformungseinrichtung hergestellten Kunststoffbehältnisse befüllt und bevorzugt anschließend verschlossen. Dieses Verschließen erfolgt bevorzugt mittels eines Drehverschlusses, der auf ein Gewinde der Kunststoffbehältnisse und insbesondere auf ein Außengewinde der Kunststoffbehältnisse aufgeschraubt wird.

Bei einem weiteren bevorzugten Verfahren werden die zu inspizierenden Behältnisse aus einem Transportpfad der Behältnisse ausgeleitet und insbesondere aus einem Transportpfad, entlang dessen die Kunststoffvorformlinge von der Erwärmungseinrichtung zu der Umformungseinrichtung transportiert werden. Dies bedeutet, dass bevorzugt nicht alle Kunststoffbehältnisse inspiziert werden, sondern nur einige und diese insbesondere stichprobenartig kontrolliert werden. Diese Inspektion kann dabei in vorgegebenen zeitlichen Abständen erfolgen oder auch jeweils nach einer vorgegebenen Anzahl von Behältnissen von Behältnissen oder Kunststoffvorformlingen.

Bei einem weiteren bevorzugten Verfahren werden die von der Umformungseinrichtung zu einer nachgeordneten Einrichtung wie etwa einer Fülleinrichtung transportierten Behältnisse oder einige dieser Behältnisse inspiziert.

Bei einem weiteren bevorzugten Verfahren wird ein Zeitpunkt erfasst, zu welchem ein bestimmtes Behältnis inspiziert und/oder aus einem Transportpfad ausgeleitet wird.

Bei einem bevorzugten Verfahren wird der Wert, der für wenigstens eine physikalische Eigenschaft eines Tragrings eines Kunststoffvorformlings und/oder eines Kunststoffbehältnisses charakteristisch ist, aus einer Gruppe von Werten ausgewählt, welche eine Erstreckungsrichtung des Tragrings gegenüber einer Längsrichtung des Kunststoffvorformlings, eine Wanddicke des Tragrings, eine Krümmung des Tragrings, insbesondere das Vorhandensein einer solchen Krümmung bezogen auf eine vorgegebene Ebene und insbesondere eine Ebene, welche durch eine Längsrichtung des Kunststoffvorformlings und eine radiale Richtung aufgespannt wird, eine Konzentrizität des Tragrings gegenüber einer Symmetrieachse des Kunststoffvorformlings, einen Radius des Tragrings, einen Abstand des Tragrings zu einem an dem Kunststoffvorformling angeordneten Verschluss, einen Abstand des Tragrings zu einem Gewinde des Kunststoffvorformlings und dergleichen enthält.

Bei einem weiteren bevorzugten Verfahren ist der Wert, der für wenigstens eine physikalische Eigenschaft eines Tragrings eines Kunststoffvorformlings und/oder eines Kunststoffbehältnisses charakteristisch ist, für einen Abstand zwischen einem Referenzpunkt an dem Kunststoffbehältnis, insbesondere dem Tragring und einem weiteren Referenzpunkt charakteristisch (oder ist ein solcher Wert). Besonders bevorzugt ist der weitere Referenzpunkt insbesondere an dem Kunststoffbehältnis oder an dem Behältnisverschluss angeordnet.

Aus einem derartigen Abstand kann geschlossen werden, ob der Tragring in einer Sollposition gegenüber anderen Bereichen des Verschlusses oder gegenüber anderen Bereichen des Kunststoffbehältnisses angeordnet ist.

Es wäre auch möglich, mehrere derartige weitere Referenzpunkte zu definieren, beispielsweise einen Referenzpunkt, der sich ebenfalls an dem Behältnisverschluss befindet und einen Referenzpunkt, der sich an dem Kunststoffbehältnis befindet. Auch wäre es denkbar, anstelle oder zusäztlich zu Referenzpunkten Referenzlinien an dem Behältnisverschluss oder dem Kunststoffbehältnis zu definieren, beispielsweise Referenzlinien, welche (bei aufrecht stehendem Behältnis) horizontal verlaufen.

Bevorzugt weist die Inspektionseinrichtung wenigstens eine Bildaufnahmeeinrichtung auf, welche wenigstens ein Bild eines zu inspizierenden Kunststoffvorformlings aufnimmt, um den besagten Wert zu ermitteln. Bevorzugt nimmt diese Bildaufnahmeeinrichtung ein Bild des Kunststoffvorformlings in einer Richtung auf, welche wenigstens eine Komponente aufweist, welche senkrecht zu einer Längsrichtung des Kunststoffvorformlings steht. So kann beispielsweise ein Bild des Kunststoffvorformlings oder des Behältnisses von schräg von unten aufgenommen werden, um den Tragring abzubilden.

Bevorzugt wird der Kunststoffvorformling zum Zweck dieser Bildaufnahme beleuchtet und insbesondere mittels Weißlicht beleuchtet. Besonders bevorzugt wird wenigstens ein Bild des Kunststoffvorformlings im Auflichtverfahren aufgenommen.

Bei einem weiteren bevorzugten Verfahren wird an wenigstens einem Kunststoffbehältnis ein Verschluss angeordnet, wobei dieser Verschluss bevorzugt auf ein Gewinde des Kunststoffvorformlings geschraubt wird. Besonders bevorzugt wird dieser Verschluss bis zu einem maximalen Verschlussdrehwinkel geschraubt.

Besonders bevorzugt wird das mit dem Verschluss versehene Kunststoffbehältnis inspiziert und wenigstens ein Wert erfasst, der für ein geometrisches Verhältnis zwischen dem Kunststoffbehältnis und dem an dem Kunststoffbehältnis angeordneten Verschluss charakteristisch ist, wobei dieses geometrische Verhältnis bevorzugt ein geometrisches Verhältnis wenigstens eines Abschnitts des Verschlusses oder des Kunststoffbehältnisses zu dem Tragring des Kunststoffbehältnisses ist.

Bei einem weiteren bevorzugten Verfahren wird ein Sollwert für den oben genannten Wert ermittelt. Besonders bevorzugt wird dieser Sollwert außerhalb eines Produktionsbetriebs ermittelt.

Bei einem bevorzugten Verfahren wird (insbesondere zum Zweck der Ermittlung dieses Sollwerts) an wenigstens einem Kunststoffvorformling ein Verschluss angeordnet wobei dieser Verschluss bevorzugt auf ein Gewinde des Kunststoffvorformlings geschraubt wird und bevorzugt der mit dem Verschluss versehene Kunststoffvorformling inspiziert wird und wenigstens ein Wert erfasst wird, der für ein geometrisches Verhältnis zwischen dem Kunststoffvorformling und dem an dem Kunststoffvorformling angeordneten Verschluss charakteristisch ist, wobei dieses geometrische Verhältnis bevorzugt ein geometrisches Verhältnis wenigstens eines Abschnitts des Verschlusses oder des Kunststoffbehältnisses zu dem Tragring des Kunststoffvorformlings ist.

Der Sollwert kann jedoch auch in anderer Weise bestimmt werden, etwa manuell durch einen Maschinenbediener. Auch kann der Sollwert durch eine Benutzereingabe vorgegeben werden. Auch kann der Sollwert beispielsweise aus einer Speichereinrichtung abgerufen werden, in der für bestimmte Kunststoffvorformlinge solche Sollwerte hinterlegt sind.

Vor der Produktion (insbesondere vor einem Dauerbetrieb und/oder Produktionsbetrieb) wird bevorzugt der optimale Abstand zwischen dem Tragring (insbesondere anhand eines noch nicht geblasenen Kunststoffvorformlings) und einem Referenzwert insbesondere einer Referenzposition, insbesondere des Verschlusses (oder des Kunstoffbehältnisses) gemessen, um einen Sollwert festzulegen. Das kann beispielsweise stromaufwärts des Ofens erfolgen. Alternativ wäre es auch denkbar, dass dieser Abstand von einem Bediener gemessen wird und in der Maschine abgespeichert wird.

In einem anschließendem Dauerbetrieb bzw. Produktionsbetrieb wird der Abstand zwischen dem Tragring (jetzt aber von dem geblasenen Kunststoffbehältnis) und dem Verschluss gemessen und mit dem Sollwert verglichen. Im Anschluss findet bevorzugt anhand dieses Vergleichs und insbesondere eines Ergebnisses dieses Vergleichs eine Steuerung und insbesondere Regelung der Vorrichtung statt. Diese weitere Messung erfolgt dabei bevorzugt nach dem Verschließvorgang.

Ist generell die Temperatur der Kunststoffvorformlinge zu hoch, dann kann es dazu kommen, dass die Streckblasmaschine den Hals bzw. der Neck der Flasche verformt. Der Tragring wird beispielsweise nach oben gebogen. Ebenso verschwindet teilweise immer mehr der Einzug unter dem Tragring mit dem ein Aufsteigen des Behältnisses verhindert werden soll, insbesondere wenn er von unten mit einer Klammer gehalten wird.

Wenn der Tragring nach oben gebogen wird, kann es vorkommen, dass die Verschlüsse beim Verschließen an dem Tragring aufstehen. In der Folge werden diese gestaucht bzw. sie verwinden sich, was wiederum dazu führen kann, dass die Verschlussinspektion einen Schiefsitz des Verschlusses bemängelt.

Bei einem weiteren bevorzugten Verfahren wird der mit dem Verschluss versehene Kunststoffvorformling inspiziert und wenigstens ein Wert erfasst, der für ein geometrisches Verhältnis zwischen dem Kunststoffvorformling und dem an dem Kunststoffvorformling angeordneten Verschluss charakteristisch ist, wobei dieses geometrische Verhältnis bevorzugt ein geometrisches Verhältnis wenigstens eines Abschnitts des Verschlusses zu dem Tragring des Kunststoffvorformlings ist. So kann beispielsweise ein Abstand zwischen einer Unterkante des Verschlusses und dem Tragring insbesondere in der Längsrichtung der Kunststoffvorformlinge erfasst werden.

Daneben oder zusätzlich kann auch die Höhe eines Merkmals an dem Verschluss erfasst werden. Dabei kann, wie oben erwähnt, diese Untersuchung stichprobenartig bei einzelnen Kunststoffvorformlingen durchgeführt werden oder bei allen. Bei einem weiteren bevorzugten Verfahren wird diese Inspektion im laufenden Betrieb vorgenommen. Auch ist es, wie oben erwähnt, möglich, diese Inspektion offline durchzuführen.

Einem weiteren bevorzugten Verfahren wird wenigstens ein für den Betrieb der Erwärmungseinrichtung charakteristischer Wert und insbesondere ein Umgebungswert gemessen, wobei bevorzugt die Umformungseinrichtung und/oder die Erwärmungseinrichtung unter Berücksichtigung dieses Werts gesteuert und/oder geregelt wird.

Bei dem oben beschrieben Verfahren werden bevorzugt auch Umgebungsparameter ermittelt. Diese Daten werden bevorzugt (insbesondere in einer Datenbank) gespeichert. Anhand dieser Daten können (insbesondere durch eine künstliche Intelligenz) Zusammenhänge zwischen allen ermittelten Parametern gebildet werden. So weiß man im Besten Fall, dass beispielsweise die Umgebungstemperatur X einen bestimmten Einfluss auf das Aufheizverhalten des Kunststoffvorformlings hat und dass es somit zu einem Verbiegen des Tragrings kommt oder mit einer bestimmten Wahrscheinlichkeit kommen kann.

Diese Daten können jetzt verwendet werden, um die Umformungsvorrichtung und/oder die Erwärmungseinrichtung vorab zu regeln und/oder zu steuern, bevor es zu einem Verbiegen kommt. Somit wird die Ausschussrate verringert.

So wäre es möglich, einzelne Heizelemente der Erwärmungseinrichtung anzusteuern, um die Erwärmung der Kunststoffvorformlinge anzupassen. Bevorzugt sind entlang eines Transportpfads der Kunststoffvorformlinge mehrere insbesondere stationäre Heizelemente vorgesehen, an denen die Kunststoffvorformlinge vorbeitransportiert werden.

Bevorzugt sind entlang der Längsrichtung der Kunststoffvorformlinge mehrere Heizstrahler vorgesehen, welche bevorzugt individuell angesteuert werden, um die Heizleistung auch in der Längsrichtung der Kunststoffvorformlinge anpassen zu können.

Bei einem weiteren bevorzugten Verfahren wird wenigstens ein für den Betrieb der Umformungseinrichtung charakteristischer Wert und insbesondere Umgebungswert gemessen und es wird bevorzugt die Erwärmungseinrichtung und/oder die Umformungseinrichtung unter Berücksichtigung dieses Werts gesteuert.

Diesem Verfahren liegt die Idee zugrunde, dass die Erwärmungseinrichtung und die Umformungseinrichtung zusammenwirken und sich Parameteränderungen bei der einen oder beiden Vorrichtungen auch auf die nachgeordnete auswirken können.

Es wird darauf hingewiesen, dass dieses Verfahren, bei welchem der Umgebungswert bestimmt wird auch unabhängig von dem oben genannten Verfahren, bei welchem der Tragring inspiziert wird, anwendbar ist.

Die Anmelderin behält sich daher vor, Schutz zu beanspruchen für ein Verfahren zum Herstellen von Kunststoffbehältnissen wobei Kunststoffvorformlinge entlang eines vorgegebenen Transportpfads transportiert werden und diese Kunststoffvorformlinge einen Grundkörper, eine Mündung und einen Tragring aufweisen und mittels wenigstens einer Erwärmungseinrichtung die Grundkörper der Kunststoffvorformlinge erwärmt werden und anschließend die erwärmten Kunststoffvorformlinge zu einer Umformungseinrichtung zum Umformen von Kunststoffvorformlingen zu Kunststoffbehältnissen transportiert werden und durch Beaufschlagung mit einem fließfähigen Medium zu den Kunststoffbehältnissen umgeformt werden, wobei erfindungsgemäß wenigstens ein für den Betrieb der Erwärmungseinrichtung charakteristischer Wert und insbesondere ein Umgebungswert gemessen wird, wobei bevorzugt die Umformungseinrichtung und/oder die Erwärmungseinrichtung unter Berücksichtigung dieses Werts gesteuert und/oder geregelt wird.

Bevorzugt wird daher die Umformungseinrichtung, insbesondere eine Blasmaschine sowie auch die Erwärmungseinrichtung, insbesondere ein Heiztunnel mit einer Umfeld Sensorik ausgestattet, welche die relevanten Einflüsse beispielsweise auf die gemessene Verschlusshöhe aufnimmt. Bei diesen Einflüssen kann es sich beispielsweise um die Umgebungstemperatur, eine Luftfeuchte, eine Temperatur der Kunststoffvorformlinge, einen Absorptionsgrad der Kunststoffvorformlinge einen Umgebungsluftdruck und dergleichen handeln.

Bevorzugt wird zu diesem Zweck eine künstliche Intelligenz (KI) verwendet, welche bevorzugt den Heizprozess und oder den Blasprozess (insbesondere proaktiv) auf sich ändernde Eingangsgrößen ändert bzw. so angepasst, dass es zu keiner Änderung und insbesondere keiner Verschlechterung der Halsqualität kommt.

Auf diese Weise werden keine Behältnisse mit einer schlechten Halsqualität produziert. Durch eine höhere und oder konstantere Qualität wird auch ein besserer Transport der Kunststoffvorformlinge durch die Maschine erreicht.

Besonders bevorzugt ist dieser Umgebungswert aus einer Gruppe von Werten ausgewählt, welche eine Umgebungstemperatur, eine Luftfeuchte, einen Luftdruck, eine Temperatur der Kunststoffvorformlinge vor deren Erwärmung, eine Temperatur der Kunststoffvorformlinge nach deren Erwärmung, eine Temperatur der Kunststoffvorformlinge während deren Erwärmung, einen Temperaturverlauf der Kunststoffvorformlinge während deren Erwärmung, eine Temperatur der Außenwandung der Kunststoffvorformlinge, eine Temperatur der Innenwandung der Kunststoffvorformlinge, einen Absorptionsgrad der Kunststoffvorformlinge, insbesondere für Infrarotstrahlung und/oder Mikrowellen, ein Temperaturprofil der Kunststoffvorformlinge bezüglich der Längsrichtung, ein Temperaturprofil der Kunststoffvorformlinge bezüglich deren Umfangsrichtung und dergleichen enthält. Besonders bevorzugt werden mehrere dieser genannten Werte bestimmt.

Im weiteren bevorzugten Verfahren wird einem bzw. dem inspizierten Behältnis wenigstens ein Arbeitsparameter und werden diesen bevorzugt die Arbeitsparameter zugeordnet, mittels denen dieses Behältnis behandelt (und insbesondere erwärmt und/oder umgeformt) wurde. Besonders bevorzugt wird das inspizierte Behältnis identifiziert.

Bei einem weiteren bevorzugten Verfahren werden dem inspizierten Behältnis, insbesondere mittels einer Identifikationsinformation die Umgebungsdaten und/oder die Messdaten zugeordnet, mittels denen dieses Behältnis behandelt wurde. Insbesondere handelt es sich dabei um Umgebungsdaten oder Messdaten, welche für Parameter charakteristisch sind, mittels denen dieses Behältnis oder der Kunststoffvorformling erwärmt wurde.

Bei einem weiteren bevorzugten Verfahren wird ein Modell erstellt, welches Produktionsdaten (insbesondere Arbeitsparameter und/oder Umgebungsdaten und/oder Messdaten) und den Wert, der für einen Tragring des Kunststoffvorformlings charakteristisch ist, verbindet.

Bei einem weiteren bevorzugten Verfahren wird auch das gefertigte Kunststoffbehältnis inspiziert. Dabei ist es möglich, dass wenigstens ein Parameter bestimmt wird, der für wenigstens eine physikalische Eigenschaft des Tragrings charakteristisch ist.

Bevorzugt wird das Behältnis in einem unverschlossenen und/oder unbefüllten Zustand inspiziert. Bei einem weiteren bevorzugten Verfahren wird das befüllte und mit einem Behältnisverschluss versehene Behältnis inspiziert.

Besonders bevorzugt werden auch bei der Behandlung des Behältnisses und/oder des Kunststoffvorformlings Messwerte aufgenommen, die für diese Behandlung charakteristisch sind. Bei diesen Messwerten kann es sich beispielsweise um gemessene Druckwerte handeln, um gemessene Durchflusswerte, um Temperaturen, um Strahlerleistungen von Heizstrahlern der Erwärmungseinrichtung und dergleichen. Auch diese Messwerte werden bevorzugt mit erfasst.

Bei einem weiteren vorteilhaften Verfahren wird eine Vielzahl von Behältnissen inspiziert und bevorzugt aus den bei diesen Inspektionen ermittelten Messwerten, insbesondere den Messwerten, welche für die Tragringe und/oder die physikalischen Eigenschaften der Tragringe charakteristisch sind, ein Modell zur Steuerung der Behandlungseinrichtung und/oder der Erwärmungseinrichtung und/oder der Umformungseinrichtung abgeleitet.

Bevorzugt wird nun von einer möglichst großen Zahl an Behältnissen und einer breiten Varianz an Produktionsdaten und/oder Umgebungsdaten und/oder Messwerten (insbesondere der für die physikalischen Eigenschaften der Tragringe charakteristischen Messwerte) alle verfügbaren Daten zusammengebracht und/oder einander zugeordnet und bevorzugt daraus ein Modell gebildet.

Zur Modellbildung können verschiedene Möglichkeiten in Betracht gezogen werden. So können beispielsweise klassische Korrelationsanalysen oder Dimensionsanalysen vorgenommen werden. Auch können mit Hilfe mathematischer Fitfunktionen Zusammenhänge modelliert werden.

Es kann weiterhin unter Hinzuziehen eines Experten ein Modell erzeugt werden. Ebenfalls denkbar sind verschiedene Methoden der KI, wie ein Neuronales Netzwerk eine Reinforcement Learning oder eine Physical Based KI welche ein Modell erzeugen.

Bevorzugt erfolgt die Ermittlung von Arbeitsparametern und/oder Umgebungsparametern mit einem (künstlichen) neuronalen Netzwerk und insbesondere auf auf wenigstens einem, und insbesondere genau einem, (künstlichen) neuronalen Netzwerk basierenden (computerimplementierten) Verfahren des maschinellen Lernens. Bevorzugt basiert das Simulations-Behältnisinspektions-Modell maschinellen Lernens auf einem (künstlichen) neuronalen Netzwerk.

Die Daten die in das Model fließen können während Standard Produktion erzeugt werden oder in speziellen Produktionsläufen in denen gezielt bestimmte Parameter variiert werden. Es ist auch denkbar beide Verfahren zu kombinieren und in einem "Teachinglauf" ein Basisset an Daten für ein Basismodell zu erzeugen und dann in laufender Produktion nach und nach daten in das System einzuspeisen und gegeben falls das Modell nachzuschärfen

Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Modell bzw. dem (künstlichen) neuronalen Netzwerk die (zu verarbeitenden) Daten, insbesondere die Sensordaten (oder hiervon abgeleitete Daten) und/oder die Daten der Inspektionseinrichtung, als Eingangsgrößen zugeführt. Bevorzugt bildet das Modell bzw. das künstliche neuronale Netzwerk die Eingangsgrößen in Abhängigkeit einer parametrierbaren Verarbeitungskette auf Ausgangsgrößen ab, wobei als Ausgangsgröße bevorzugt die Messgrößen und bevorzugt als Ausgangsgrößen eine Vielzahl von Messgrößen gewählt sind.

Bevorzugt gleicht nun, insbesondere auf Basis des vorhandenen Modells während dem Produktionslauf (oder in kurzen Pausen) die Anlage die Performance der Behältnisse und insbesondere die physikalischen Eigenschaften der Tragringe an die Sollperformance insbesondere en an die Solleigenschaften dieser Tragringe an.

Hierzu versucht bevorzugt die Behandlungseinrichtung, insbesondere die Erwärmungseinrichtung und/oder die Umformungseinrichtung die beinflussbaren Produktionsdaten so einzustellen, dass die erwünschte Performance und/oder die erwünschte Gestalt der Tragringe erreicht wird.

Bei Produktionsdaten wird bevorzugt zwischen drei verschieden Datenarten und/oder Parameterarten unterschieden, nämlich einerseits zwischen direkt beeinflussbaren Daten oder Parametern (z.B. Maschinengeschwindigkeit oder Fülldruck oder einer Heizleistung), indirekt beeinflussbaren Parametern (Wandstärkenverteilung, Preformtemperatur am Ofenauslauf oder Füllhöhe oder auch den Eigenschaften der Tragringe, wie deren Abmessungen oder deren Höhenposition) und nicht beeinflussbaren Werten (Luftfeuchtigkeit, IR-Absorbtionsverhalten oder Hallentemperatur).

Um die gewünschte Sollperformance und/oder Sollzustände insbesondere im Hinblick auf den Tragring zu erreichen kann es sein, dass verschieden kaskadierte Modelle genutzt werden. So ist es denkbar das es z.B. ein Modell gibt welches eine indirekt beinflussbare Größe (z.B. Wandstärkenverteilung, oder für den Tragring charakteristische Eigenschaften) über Anpassung von direkt beeinflussbaren Werten (z.B. Heizungsteller, Heizeinrichtungen oder Reckgeschwindigkeit oder Blasdrücke) derart anpasst, dass die im Hauptmodel hinterlegte Ausgestaltung des Tragrings zur aktuellen Hallentemperatur erzeugt wird um die Sollperformance zu erreichen.

Ein weiterer Punkt, der bevorzugt in das Modell einfließen kann, sind Nebenbedingungen wie z.B. Energiebedarf oder Abfülldruck oder eine Kraft, mit der eine Blasdüse auf die zu expandierenden Kunststoffvorformlinge aufgesetzt wird. Es kann z.B. versucht werden der Sollperformance so nahe wie möglich zu kommen bei minimalem Energiebedarf.

Es ist auch denkbar, dass das Modell nach und nach geschärft wird, indem immer wieder Performancedaten erhoben werden und mit den Modellprognosedaten abgeglichen werden.

Die vorliegende Erfindung wird nunmehr an einem konkreten Beispiel nämlich einer Blasformmaschine erläutert. Derartige Blasformmaschinen weisen einen drehbaren Transportträger auf, an dem eine Vielzahl von Umformungsstationen angeordnet ist, welche Kunststoffvorformlinge zu Kunststoffbehältnissen umformen. Weiterhin weisen diese Maschinen bevorzugt auch Reckeinheiten auf, welche die Kunststoffvorformlinge in ihrer Längsrichtung dehnen. Bevorzugt weisen diese Maschinen auch Prozessregelungen auf, die insbesondere individuell für jede Umformungsstation die Umformungsprozesse regeln.

Daneben wiesen diese Maschinen, wie oben erwähnt, bevorzugt Erwärmungseinrichtungen auf, welche die Kunststoffvorformlinge erwärmen.

Bereits bei der Prozessfindung bzw. Validierung der Behältnisqualität und/oder der Eigenschaften der Tragringe werden bevorzugt mehrere Musterflaschen und/oder Mustervorformlinge ausgeleitet und im Nachgang Onlinequalitätstests oder auch insbesondere Offlinequalitätstests unterzogen. Dabei werden bevorzugt Optimierungsschleifen gefahren und bevorzugt iterativ so lange Optimierungsschleifen gefahren, bis die Qualitätstests für gut befunden werden.

Stellt sich heraus, dass das beste Ergebnis bereits in den Anfängen dieser Optimierungsschleife gefunden wurde und im Nachgang trotz längerer Bemühungen keine weitere Verbesserung mehr gefunden werden konnte, würden gegebenenfalls auch diese ersten Ergebnisse als Kompromiss akzeptiert werden.

In diesem Fall kann im Stand der Technik das Problem auftreten, dass die zugehörigen Einstellparameter und gegebenenfalls Onlinemesswerte wie beispielsweise Messungen der Wanddicke der Kunststoffvorformlinge und dergleichen zu diesem "besten Ergebnis" nicht mehr bekannt sind oder nicht gespeichert wurden.

Im Folgenden werden unter Offlinemessungen solche Messungen an Behältnissen und/oder Kunststoffvorformlingen verstanden, die außerhalb einer Herstellungsanlage vorgenommen werden und die letztlich nachweisen sollen, ob das Behältnis und/oder ein Kunststoffvorformling und/oder ein Tragring eines Kunststoffvorformlings oder eines Kunststoffbehältnisses den geforderten Qualitätsansprüchen entspricht. Zu diesen Messungen zählen beispielsweise Messungen der Sektionsgewichte, Thermotests, optische Vermessungen insbesondere hinsichtlich des Tragrings und dergleichen.

Unter Onlinemessungen werden Messungen verstanden, die während der Produktion und insbesondere ohne eine Ausleitung von Behältnissen und/oder Kunststoffvorformlingen vorgenommen werden können (wie beispielsweise Wanddickenmessungen, optische Messverfahren zur Ausformung und Verstreckung, optische Vermessungen des Tragrings und dergleichen.

Korrelieren diese Messungen ausreichend gut mit den eigentlichen Qualitätsansprüchen, können Offlinemessungen reduziert werden oder völlig entfallen.

Bevorzugt werden jedoch, wie oben erwähnt auch Offlinemessungen und Onlinemessungen, welche an dem gleichen Behältnis oder der gleichen Gruppe an Behältnissen durchgeführt wurden, einander zugeordnet.

Bei einem weiteren bevorzugten Verfahren werden sowohl Offlinemessungen vorgenommen, d. h. Messungen, bei denen die Behältnisse ausgeleitet werden, als auch Onlinemessungen, die im Produktionsbetrieb durchgeführt werden. Bevorzugt können Identifikationsinformationen sowohl für diese Offlinemessungen als auch für Onlinemessungen vorgegeben bzw. ausgegeben werden.

Eine optional vorhandene Identifikationsinformation (auch als Ausleit-ID bezeichnet) verhindert, dass gute Einstellungen verloren gehen können und Prozessarbeit mehrfach gemacht werden muss. Da die Offline - Qualitätsmessungen oft parallel zur Behältnisoptimierung ablaufen, kann es leicht passieren, dass gute Zwischenstände einfach wieder verloren gehen, da die zugehörigen Einstellparameter nicht rückgespeichert wurden. In schwierigen Fällen kann es sein, dass wegen kleinerer Ausfälle der Kunde zunächst auf einer weiteren Optimierung besteht, letztlich dann aber doch der zuvor abgelehnte Zwischenstand akzeptiert wird.

Eine Forderung einer gleichbleibenden Qualität für alle Behältnisse und/oder alle Tragringe ist im Nachgang in der Regel kaum zu erfüllen, da einerseits die zugehörigen Gegebenheiten nicht mehr rekonstruierbar sind und andererseits die Informationen teilweise nur noch in Form von Messdaten vorliegen, da die Messmethoden nicht zerstörungsfrei waren.

Bei einem bevorzugten Verfahren wird solchen Kunststoffvorformlingen oder Behältnissen, welche inspiziert werden sollen eine Identifikationsinformation zugeordnet, beispielsweise eine Ausleit - ID.

Wenn den Behältnissen und/oder Kunststoffvorformlingen, wie bei einem bevorzugten Verfahren vorgeschlagen wird, eine Ausleit-ID bzw. die Identifikationsinformation zugeordnet wird, lassen sich allein über diese Identifikationsinformation, insbesondere in Verbindung mit einem zugehörigen Zeitstempel die kompletten Einstellparameter der Umformungsvorrichtung, sowie auch die zugehörigen Onlinemessdaten zu diesen Behältnissen und/oder Kunststoffvorformlingen aus der Datenbank wieder in die Maschine und in die Messeinheit übertragen.

Unter einem Regelziel werden im Folgenden die online Messergebnisse wie beispielsweise die geometrische Position des Tragrings und/oder ein Abstand eines Tragrings zu einem Verschluss und/oder einer Mündung bezeichnet, die bevorzugt im Regelsystem als Sollwerte hinterlegt werden. Prozessangaben, die von der Regelung vorgenommen werden, zielen darauf ab, dieses Regelziel möglichst gut zu erreichen.

Die Identifikationsinformation bzw. die Ausleit-ID schafft die Möglichkeit, das Onlineregelziel exakt mit den "besten Offlinemessdaten" zu matchen. Aktuell werden die Sollwerte der Onlinemessdaten während der Einlernphase (DoE (statistische Versuchsplanung)) von dem Messsystem erfasst und schließlich dem Regelungssystem übergeben.

Dies sind bevorzugt nicht identisch diejenigen Werte, die im Validierungsprozess erreicht wurden, sondern "nur" diejenigen Onlinemesswerte, die sich bei der Wiederholung der besten Einstellparameter (Bestsetpoint-Einstellungen) aus dem Validierungsprozess nun in der Einlernphase (DoE) ergeben.

Da die auszuregelnden Störeinflüsse auch bei identischen Einstellparametern für eine Verschlechterung der Behältnisqualität und/oder der Qualität der Tragringe sorgen können, besteht die Gefahr, dass bei der Einlernphase eben nicht die bestmögliche Wanddickenverteilung aus dem Validierungsprozess, sondern gegebenenfalls ein ungünstigeres Wanddickenprofil als Regelziel hinterlegt wird. Das Regelziel wäre somit schlechter als von einem Kunden gewünscht.

Falls man zu den ausgeleiteten Testbehältnissen im Validierungsprozess jedoch die jeweilige Identifikationsinformation zur Verfügung hat, lassen sich aus der Datenbank allein darüber in Verbindung mit den zugehörigen Zeitstempeldaten nicht nur die kompletten Einstellparameter der Streckblasmaschine und/oder der Erwärmungseinrichtung (Best-setpoint-Einstellungen), sondern auch die zugehörigen Onlinemessdaten zu diesen Behältnissen und/oder Kunststoffvorformlinge als perfektes Regelziel wieder in die Messeinheit und in die Regelung übertragen.

Bei einem weiteren bevorzugten Verfahren wird die Identifikationsinformation gemeinsam mit einem Zeitstempel in den Datenbankdaten, insbesondere die DMM(Daten Management Maschine)-Daten gespeichert bzw. geschrieben.

Bei einem weiteren bevorzugten Verfahren wird daher, wie oben erwähnt, ein Zeitpunkt erfasst, zu welchem ein bestimmtes Behältnis und/oder ein bestimmter Kunststoffvorformling inspiziert und/oder aus einem Transportpfad ausgeleitet wird.

Wie oben erwähnt, enthält die Identifikationsinformation bevorzugt einen Zeitstempel bzw. ein für einen Zeitpunkt charakteristisches Merkmal. Bevorzugt wird die Identifikationsinformation mit einem Zeitstempel abgespeichert.

Bei einem bevorzugten Verfahren wird ein Modell erstellt, welches Produktionsdaten (Arbeitsparameter und/oder Umgebungsdaten und/oder Messdaten) und Performancedaten verbindet. Bevorzugt wird die Behälterperformance (und/oder die Qualität des Tragrings) basierend auf Produktionsdaten und dem Modell in (Echtzeit) optimiert.

Bei einem bevorzugten Verfahren werden die Produktionsdaten, bevorzugt Arbeitsparameter daher basierend auf dem Modell angepasst, um optimale Performancedaten und/oder optimale Eigenschaften des Tragrings zu erreichen.

Bei einem weiteren bevorzugten Verfahren wird die Identifikationsinformation durch einen Benutzereingriff erzeugt und/oder ist dadurch erzeugbar. Daher ist es möglich, dass nicht automatisch oder standardmäßig die Identifikationsinformation erzeugt wird, sondern lediglich, wenn der Benutzer dies wünscht.

Bevorzugt ist die Ausleitung der Behältnisse zum Zwecke der Inspektion von der herkömmlichen Ausleitung (etwa von fehlerhaften Behältnissen) separiert.

Bevorzugt ist die Identifikationsinformation kurz gehalten. So kann die Identifikationsinformation beispielsweise ein Datum und eine laufende Nummer enthalten (wobei bevorzugt die laufende Nummer jeden Tag neu startet). Daneben kann noch ein Index (a, b, c, ...) vorgesehen sein.

Sollten viele Offline-Tests erforderlich sein, können ggfs. bei Ausleitung eines Betriebszustandes mehrere Ausleitungen erforderlich werden.

Im Falle größerer (und/oder mehrerer) Ausleitungen sollte der Index (a, b, c, ...) angefügt werden.

Dies soll bevorzugt nur dann möglich sein, wenn innerhalb die Ausleitungen innerhalb einer kurzen Zeit, beispielsweise innerhalb von zwei Minuten erfolgen.

Bevorzugt können die ermittelten Daten sowohl in einer cloudbasierten Datenbank als auch in einer kundenseitigen und/oder lokalen Datenbank speicherbar sein.

Bevorzugt handelt es sich bei der charakteristischen Größe um eine Eigenschaft, die mittels Inspektion ermittelbar ist, und welche Rückschlüsse auf die Behandlung bzw. den Behandlungsvorgang ermöglicht.
bei einem weiteren bevorzugten Verfahren werden die Arbeitsparameter basierend auf dem Modell angepasst, um verbesserte Leistungsdaten und/oder Performancedaten (insbesondere im Hinblick auf den Tragring) zu erreichen. Insbesondere werden die Arbeitsparameter angepasst, um die Ist-Position und/oder die Ist-Gestalt des Tragrings zu verbessern bzw. näher an die Soll Position zu führen.

Einen einem weiteren bevorzugten Verfahren wird eine Vielzahl von Behältnissen inspiziert und aus den bei diesen Inspektionen ermittelten Messwerten wird ein Modell zur Steuerung der Behandlungseinrichtung und insbesondere der Erwärmungseinrichtung und/oder der Umformungseinrichtung abgeleitet. Dies kann dabei in der oben beschriebenen Weise erfolgen.

Bei einem weiteren bevorzugten Verfahren werden die von der Umformungseinrichtung hergestellten Kunststoffbehältnissen inspiziert und es wird wenigstens ein Wert bestimmt, der für einen Tragering eines Kunststoffbehältnisses charakteristisch ist. Mit dieser Ausgestaltung werden nach dem Umformungsprozess die Behältnisse inspiziert und aus dieser Inspektion werden Werte abgeleitet, welche für den Tragring charakteristisch sind.

Die vorliegende Erfindung ist weiterhin eine Vorrichtung zum Herstellen von Kunststoffbehältnissen gerichtet, welche eine Transporteinrichtung aufweist, welche dazu geeignet und bestimmt ist, Kunststoffvorformlinge entlang eines vorgegebenen Transportpfads zu transportieren, wobei diese Kunststoffvorformlinge einen Grundkörper, eine Mündung und einen Tragring aufweisen und weiterhin eine Erwärmungseinrichtung vorgesehen ist, welche dazu geeignet und bestimmt ist, die Grundkörper der Kunststoffvorformlinge zu erwärmen und mit einer Umformungseinrichtung zum Umformen von Kunststoffvorformlingen zu Kunststoffbehältnissen, welche dazu geeignet und bestimmt ist, die erwärmten Kunststoffvorformlinge durch Beaufschlagung mit einem fließfähigen und insbesondere gasförmigen Medium zu den Kunststoffbehältnissen umzuformen.

Erfindungsgemäß ist eine Inspektionseinrichtung vorgesehen, welche dazu geeignet und bestimmt ist, wenigstens einen Wert zu bestimmen, der für wenigstens eine physikalische Eigenschaft des Tragrings eines Kunststoffvorformlings und/oder eine physikalische Eigenschaft des Tragrings eines Kunststoffbehältnisses charakteristisch ist und es ist eine Steuerungseinrichtung vorgesehen, welche dazu geeignet und bestimmt ist, unter Berücksichtigung dieses Werts wenigstens einen Behandlungsparameter der Erwärmungseinrichtung und/oder der Umformungseinrichtung zu steuern.

Es wird daher auch vorrichtungsseitig vorgeschlagen, dass eine Inspektionseinrichtung vorgesehen ist, welche den Tragring beobachtet und hieraus die Werte abgeleitet werden, mittels denen die Erwärmungseinrichtung und/oder die Umformungseinrichtung gesteuert wird.

Bevorzugt ist die Erwärmungseinrichtung derart ausgebildet, dass sie zwar die Grundkörper der Kunststoffvorformlinge erwärmt, nicht jedoch oder nur in erheblich reduziertem Maß die Mündungen, Gewinde und/oder Tragringe der Kunststoffvorformlinge. Bevorzugt weist die Vorrichtung eine Abschirmungseinrichtung auf, welche dazu geeignet und bestimmt ist, eine Erwärmung der Tragringe und/oder der Mündungsbereiche der Kunststoffvorformlinge zu verhindern.

Bei einer weiteren vorteilhaften Ausführungsform weist die Vorrichtung wenigstens eine Sensoreinrichtung auf, welche dazu geeignet und bestimmt ist, wenigstens einen für den Betrieb der Erwärmungseinrichtung und/oder den Betrieb der Umformungseinrichtung charakteristischen Wert und insbesondere einen Umgebungswert zu messen und oder zu bestimmen.

Besonders bevorzugt ist die Erwärmungseinrichtung und/oder die Umformungseinrichtung unter Berücksichtigung dieses Wertes steuerbar.

Bei einer weiteren vorteilhaften Ausführungsform weist die Vorrichtung eine Verschließeinrichtung zum Verschließen der Behältnisse auf und die Inspektionseinrichtung ist in einer Transportrichtung der Kunststoffbehältnisse nach dieser Verschließeinrichtung angeordnet.

Es wäre auch denkbar, dass die Inspektionseinrichtung nach dem Verschließen (d.h. nach dem eigentlichen Verschließvorgang angeordnet ist aber immer noch in der Verschließeinrichtung. Auch dies wird als Anordnung nach der Verschließeinrichtung aufgefasst.

Besonders bevorzugt weist die Vorrichtung eine Befülleinrichtung zum Befüllen der Kunststoffvorformlinge auf.

Bei einer weiteren bevorzugten Ausführungsform weist die Vorrichtung eine Vergleichseinrichtung auf, welche dazu geeignet und bestimmt ist, den Wert mit einem Sollwert und/oder Referenzwert zu vergleichen.

Weitere Vorteile und Ausführungsformen ergeben sich aus den beigefügten Zeichnungen:
Darin zeigen:
- Fig. 1: eine Darstellung einer erfindungsgemäßen Vorrichtung; und
- Fig. 2: zwei Darstellungen zur Veranschaulichung der der Erfindung zugrundeliegenden Problematik.

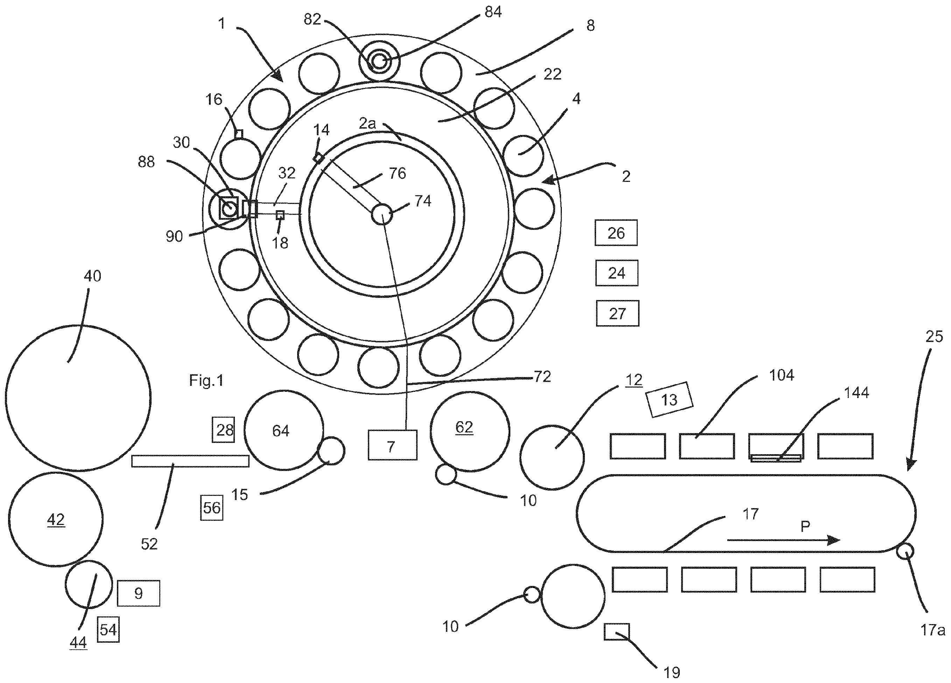

Fig. 1 zeigt eine Vorrichtung 1 zum Umformen von Kunststoffvorformlingen 10 zu Kunststoffbehältnissen 15. In diesem Falle ist dies auch die Behandlungseinrichtung zum Behandeln von Behältnissen. Diese Vorrichtung 1 weist einen drehbaren Träger 22 auf, an dem eine Vielzahl von Umformungsstationen 4 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Daneben wäre es auch denkbar, dass die Blasdüse an der Blasformeinrichtung abdichtet. Bevorzugt ist diese Beaufschlagungseinrichtung in einer Längsrichtung und bevorzugt ausschließlich in einer Längsrichtung der Kunststoffvorformlinge bewegbar.

Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern. Bevorzugt weist jede Umformungsstation einen derartigen Ventilblock auf.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt. Bevorzugt wird noch eine weitere Druckstufe, insbesondere ein weiterer Zwischenblasdruck vorgesehen.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung. Die Reckstange ist (bevorzugt ebenfalls ausschließlich) in der Längsrichtung der Kunststoffvorformlinge 10 beweglich.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung, d.h. der Behandlungseinrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an ein Druckluftreservoir 2a angegeben, bei dem es sich bevorzugt um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 32 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung eine (in Fig. 1 nicht gezeigte) Deckeleinrichtung auf, welche den Reinraum 8 nach oben hin begrenzt. Diese Deckeleinrichtung ist dabei bevorzugt an wenigstens einer der Reckeinrichtungen 30 angeordnet.

Die Vorrichtung weist eine Vielzahl von Mess- und/oder Sensoreinrichtungen auf, welche zur Steuerung der Vorrichtung dienen. Das Bezugszeichen 14 kennzeichnet eine Druckmesseinrichtung, welche einen Luftdruck innerhalb des Druckluftreservoirs 2a misst. Bevorzugt weisen auch die übrigen Druckluftreservoirs entsprechende Druckmesseinrichtungen auf.

Das Bezugszeichen 16 kennzeichnet eine weitere Druckmesseinrichtung, welche einen Luftdruck insbesondere einen Behältnisinnendruck des zu expandierenden Kunststoffvorformlings misst. Bevorzugt ist jeder Umformungsstation eine solche Druckmesseinrichtung zugeordnet.

Das Bezugszeichen 18 kennzeichnet ebenfalls schematisch eine Durchflussmesseinrichtung, welche einen Durchfluss der Blasluft von einem Druckluftreservoir zu dem Ventilblock 90 einer Umformungsstation 4 bestimmt. Bevorzugt sind entsprechende Durchflussmesseinrichtungen jeweils zwischen einem Druckluftreservoir und allen Umformungsstationen angeordnet.

Auch zwischen den weiteren Druckluftreservoirs und den jeweiligen Umformungsstationen können weitere Durchflussmesseinrichtungen zugeordnet sein.

Weiterhin sind bevorzugt auch Positionserfassungseinrichtungen vorgesehen, welche Positionen der Reckstangen der einzelnen Umformungsstationen erfassen können.

Das Bezugszeichen 24 kennzeichnet eine Steuerungseinrichtung, welche die Vorrichtung 1 steuert und insbesondere regelt. Diese Steuerungseinrichtung ist dabei bevorzugt auch in der Lage, Arbeitsparameter der Vorrichtung zu ändern. Bevorzugt ist diese Steuerungseinrichtung auch dazu geeignet und bestimmt eine Erwärmungseinrichtung 25, welche die umzuformenden Kunststoffvorformlinge erwärmt, zu steuern.

Bevorzugt geben die oben genannten Mess- bzw. Sensoreinrichtungen kontinuierlich Sensor bzw. Messdaten auf, die besonders bevorzugt gespeichert werden. Auf Basis auch dieser Mess- bzw. Sensordaten kann beispielsweise eine KI ideale Arbeitsparameter zum Betrieb der Behandlungseinrichtung 1 ermitteln.

So steuert die Steuerungseinrichtung insbesondere die einzelnen Ventile und damit die Beaufschlagung der Kunststoffvorformlinge mit den einzelnen Druckniveaus. Daneben steuert die Steuerungseinrichtung bevorzugt auch eine Bewegung der Reckstangen der einzelnen Umformungsstationen. Bevorzugt steuert die Steuerungseinrichtung auch Bewegungen der Beaufschlagungseinrichtungen d.h. der Blasdüsen. Die Steuerungseinrichtung ist daher bevorzugt dazu geeignet, die Zeitpunkte, zu denen die Beaufschlagungseinrichtungen an die Kunststoffvorformlinge angelegt werden und/oder die Zeitpunkte, zu denen die Blasformeinrichtungen wieder von den Kunststoffvorformlingen abgehoben werden zu steuern und insbesondere auch, diese Zeitpunkte zu verändern.

Das Bezugszeichen 26 kennzeichnet eine Speichereinrichtung, in der insbesondere Messgrößen erfasst werden, insbesondere Druckwerte und Durchflusswerte, aber auch entsprechende Arbeitsparameter. Bevorzugt werden diese jeweiligen Werte mit einer zeitlichen Zuordnung gespeichert.

Bevorzugt können diese Werte kontinuierlich und insbesondere über lange Zeiträume eines Maschinenbetriebs gespeichert. Die Steuerungseinrichtung steuert bzw. regelt auch unter Berücksichtigung dieser aufgenommenen Messwerte die Vorrichtung.

Das Bezugszeichen 28 kennzeichnet grob schematisch eine Inspektionseinrichtung zum Inspizieren der gefertigten Behältnisse. Bevorzugt ist auch eine Zuordnungseinrichtung vorgesehen, welche dazu geeignet und bestimmt ist, einem bestimmten inspizierten Behältnis diejenigen Arbeitsparameter zuzuordnen, welche zur Herstellung dieses Behältnisses verwendet wurden. Bevorzugt ist diese Inspektionseinrichtung auch dazu geeignet und bestimmt, die Tragringe der einzelnen Kunststoffbehältnisse zu inspizieren.

Das Bezugszeichen 13 kennzeichnet schematisch eine Sensoreinrichtung, welche dazu geeignet und bestimmt ist, Umgebungsdaten aufzunehmen, wie etwa eine Umgebungstemperatur oder einen Umgebungsdruck. Auch diese ermittelten Werte werden bevorzugt bei der Steuerung der Anlage verwendet.

Das Bezugszeichen 27 kennzeichnet eine Anzeigeeinrichtung, welche zur Ausgabe von Informationen an einen Maschinenbediener dient. Mittels dieser Anzeigeeinrichtung können etwa gemessene Druck(verlaufs)kurven ausgegeben werden. Auch wäre es möglich, mittels dieser Anzeigeeinrichtung Werte auszugeben welche für physikalische Eigenschaften der Tragringe von Kunststoffvorformlingen oder Kunststoffbehältnissen charakteristisch sind.

Das Bezugszeichen 52 kennzeichnet eine Transporteinrichtung, mittels derer geblasene Kunststoffbehältnisse zu einer Fülleinrichtung 40 transportiert werden. Diese Fülleinrichtung stellt damit eine weitere Behandlungseinrichtung dar. An diese Fülleinrichtung 40 schließt sich eine Verschließeinrichtung 42 an, welche dazu geeignet und bestimmt ist, die von der Fülleinrichtung befüllten Behältnisse mit Behältnisverschlüssen zu versehen. Das Bezugszeichen 44 kennzeichnet eine Transporteinrichtung, welche die befüllten und verschlossenen Behältnisse abtransportiert.

Das Bezugszeichen 9 kennzeichnet schematisch eine Inspektionseinrichtung, welche dazu geeignet und bestimmt ist, die befüllten und mit den Behältnisverschlüssen versehenen Kunststoffbehältnisse zu inspizieren und dabei insbesondere den oben erwähnten charakteristischen physikalischen Wert für den Tragring der Kunststoffbehältnisse zu ermitteln.

Dieser Wert wird, wie oben erwähnt, bevorzugt verwendet, um die Umformungseinrichtung zu steuern und insbesondere zu regeln.

Das Bezugszeichen 54 kennzeichnet eine optionale Ausleiteinrichtung, welche dazu dient, im Rahmen einer Inspektion als fehlerhaft festgestellte Kunststoffbehältnisse auszuleiten. Das Bezugszeichen 56 kennzeichnet eine Erzeugungseinrichtung zum Erzeugen einer Identifikationsinformation.

Auf Basis dieser Identifikation kann ein ausgeleitetes Behältnis und/oder wenigstens eine Information, die mit diesem Behältnis verknüpft ist, wie etwa ein Zeitpunkt von dessen Ausleitung gespeichert werden.

Auf Basis dieser Identifikationsinformation kenn beispielsweise auch ermittelt werden, von welcher Umformungsstation 4 und/oder mit welchen Arbeitsparametern dieses ausgeleitete Behältnis behandelt wurde. Auch kann ermittelt werden, welche Umgebungsbedingungen zum Zeitpunkt der Ausleitung bestanden haben.

Gegebenenfalls können unter Verwendung dieser Identifikationsinformation und insbesondere eines Zeitpunkts auch weitere Behältnisse identifiziert werden, welche mit der gleichen Umformungsstation in dem gleichen Zeitraum umgeformt wurden. Auf diese Weise können dem Behältnis auch Werte zugeordnet werden, welche mit der Inspektionseinrichtung solchen Behältnissen erfasst wurden.

Bevorzugt ist eine weitere Ausleiteinrichtung (nicht gezeigt) vorgesehen welche zum Ausleiten von zu inspizierenden Kunststoffvorformlingen aus dem Transportpfad dient.

Das Bezugszeichen 25 kennzeichnet eine Erwärmungseinrichtung, welche die von der Umformungseinrichtung umzuformenden Kunststoffvorformlinge erwärmt. Diese Erwärmungseinrichtung weist eine Transporteinrichtung 17 auf, welche die zu erwärmenden Kunststoffvorformlinge während ihrer Erwärmung transportiert. An dieser Transporteinrichtung ist eine Vielzahl von Halteeinrichtungen 17a zum Halten der Kunststoffvorformlinge 10 angeordnet.

Das Bezugszeichen 19 kennzeichnet eine Sperreinrichtung, welche den Einlauf von Kunststoffvorformlingen in die Erwärmungseinrichtung sperren kann.

Entlang des Transportpfads der zu erwärmenden Kunststoffvorformlinge ist eine Vielzahl von (bevorzugt stationären) Heizeinrichtungen 104 angeordnet welche jeweils eine Vielzahl von Infrarotstrahlern 144 aufweisen. Zusätzlich oder alternativ können auch Laserstrahler oder Mikrowellenstrahler vorgesehen sein. Das Bezugszeichen 12 kennzeichnet eine Transporteinrichtung, welche die erwärmten Kunststoffvorformlinge von der Erwärmungseinrichtung 25 weitertransportiert.

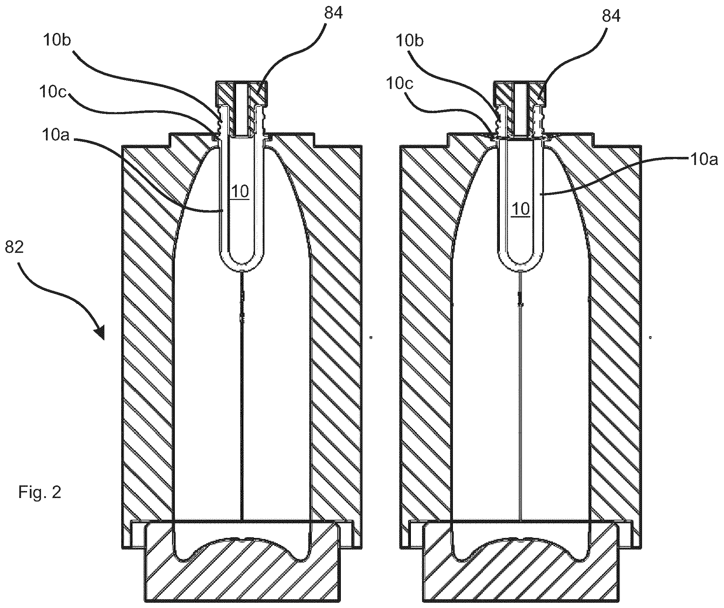

Fig. 2 zeigt eine Darstellung zur Veranschaulichung der der Erfindung zugrundeliegenden Problematik. Dabei sind zwei Blasformeinrichtungen 82 gezeigt, innerhalb deren jeweils ein Kunststoffvorformling 10 angeordnet ist.

Diese Kunststoffvorformlinge weisen jeweils einen Grundkörper 10a, einen Mündungsbereich 10b und einen Tragring 10c auf. Das Bezugszeichen 84 kennzeichnet jeweils eine Blasdüse, welche an die Mündungsbereiche der Kunststoffvorformlinge 10 anlegbar ist, um diese in deren Längsrichtung zu expandieren.

Bei der in der linken Teilfigur gezeigten Situation ist der Tragring 10c ordnungsgemäß und verformt sich nicht als Folge des Blasprozesses. Bei der in der rechten Teilfigur gezeigten Situation ist der Tragring 10c und/oder der Bereich des Kunststoffvorformlings zu stark erwärmt, was dazu führ, dass sich der Tragring verformt, bzw. leicht nach oben krümmt. In diesem Fall kommt es im weiteren Verlauf der Herstellung der Kunststoffbehältnisse und insbesondere bei deren Transport zu Störungen.

## Patentansprüche

1. Verfahren zum Herstellen von Kunststoffbehältnissen (15) wobei Kunststoffvorformlinge (10) entlang eines vorgegebenen Transportpfads transportiert werden und diese Kunststoffvorformlinge einen Grundkörper (10a), eine Mündung (10b) und einen Tragring (10c) aufweisen und mittels wenigstens einer Erwärmungseinrichtung (25) die Grundkörper (10a) der Kunststoffvorformlinge erwärmt werden und anschließend die erwärmten Kunststoffvorformlinge (10) zu einer Umformungseinrichtung (2) zum Umformen von Kunststoffvorformlingen (10) zu Kunststoffbehältnissen (15) transportiert werden und durch Beaufschlagung mit einem fließfähigen Medium zu den Kunststoffbehältnissen (15) umgeformt werden,
**dadurch gekennzeichnet, dass**
mittels einer Inspektionseinrichtung (9, 13) wenigstens ein Wert bestimmt wird, der für wenigstens eine physikalische und insbesondere geometrische Eigenschaft eines Tragrings eines Kunststoffvorformlings und/oder eines Tragrings eines Kunststoffbehältnisses charakteristisch ist und unter Berücksichtigung dieses Wertes wenigstens ein Behandlungsparameter der Erwärmungseinrichtung (25) und/oder der Umformungseinrichtung (2) gesteuert wird.

2. Verfahren nach Anspruch 1,
**dadurch gekennzeichnet, dass**
die gefertigten Kunststoffbehältnisse mit einem fließfähigen Medium befüllt und anschließend mit einem Behältnisverschluss verschlossen werden, wobei bevorzugt die Inspektion mit der Inspektionseinrichtung nach dem Verschließen des Behältnisses erfolgt.

3. Verfahren nach Anspruch 1,
**dadurch gekennzeichnet, dass**
der Wert, der für wenigstens eine physikalische Eigenschaft eines Tragrings (10c) eines Kunststoffvorformlings (10) und/oder eines Kunststoffbehältnisses charakteristisch ist, aus einer Gruppe von Werten ausgewählt ist, welche eine Erstreckungsrichtung des Tragrings gegenüber einer Längsrichtung des Kunststoffvorformlings, eine Wanddicke des Tragrings, eine Krümmung des Tragrings, eine Konzentrizität des Tragrings gegenüber einer Symmetrieachse des Kunststoffvorformlings, einen Abstand des Tragrings zu einem an dem Kunststoffvorformling angeordneten Verschluss, einen Abstand des Tragrings zu einem Gewinde des Kunststoffvorformlings, einen Abstand zwischen einem Referenzpunkt an dem Kunststoffbehältnis, insbesondere dem Tragring und einem weiteren Referenzpunkt charakteristisch ist, wobei der weitere Referenzpunkt insbesondere an dem Kunststoffbehältnis oder an dem Behältnisverschluss angeordnet ist und dergleichen enthält.

4. Verfahren nach wenigstens einem der vorangegangenen Ansprüche,
**dadurch gekennzeichnet, dass**
die Inspektionseinrichtung (9, 13) wenigstens eine Bildaufnahmeeinrichtung aufweist, welche wenigstens ein Bild eines Kunststoffbehältnisses und insbesondere eines verschlossenen Behältnisses oder eines zu inspizierenden Kunststoffvorformlings (10) aufnimmt, um den besagten Wert zu ermitteln.

5. Verfahren nach wenigstens einem der vorangegangenen Ansprüche,
**dadurch gekennzeichnet, dass**
an wenigstens einem Kunststoffbehältnis (10) ein Verschluss angeordnet wird, wobei dieser Verschluss bevorzugt auf ein Gewinde des Kunststoffbehältnisses geschraubt wird und bevorzugt das mit dem Verschluss versehene Kunststoffbehältnis (10) inspiziert wird und wenigstens ein Wert erfasst wird, der für ein geometrisches Verhältnis zwischen dem Kunststoffbehältnis und dem an dem Kunststoffbehältnis angeordneten Verschluss charakteristisch ist, wobei dieses geometrische Verhältnis bevorzugt ein geometrisches Verhältnis wenigstens eines Abschnitts des Verschlusses oder des Kunststoffbehältnisses zu dem Tragring des Kunststoffbehältnisses ist.

6. Verfahren nach wenigstens einem der vorangegangenen Ansprüche,
**dadurch gekennzeichnet, dass**
wenigstens ein für den Betrieb der Erwärmungseinrichtung und/oder den Betrieb der Umformungseinrichtung charakteristischer Wert und insbesondere Umgebungswert gemessen wird und bevorzugt die Erwärmungseinrichtung (25) und/oder die Umformungseinrichtung (2) unter Berücksichtigung dieses Wertes gesteuert wird.

7. Verfahren nach dem vorangegangenen Anspruch,
**dadurch gekennzeichnet, dass**
der charakteristische Umgebungswert aus einer Gruppe von Werten ausgewählt ist, welche eine Umgebungstemperatur, eine Luftfeuchte, einen Luftdruck, eine Temperatur der Kunststoffvorformlinge vor deren Erwärmung, eine Temperatur der Kunststoffvorformlinge nach deren Erwärmung, eine Temperatur der Kunststoffvorformlinge während deren Erwärmung, einen Absorptionsgrad der Kunststoffvorformlinge, insbesondere für Infrarotstrahlung, ein Temperaturprofil der Kunststoffvorformlinge bezüglich ihrer Längsrichtung und/oder bezüglich ihrer Umfangsrichtung und dergleichen ist.

8. Verfahren nach wenigstens einem der vorangegangenen Ansprüche,
**dadurch gekennzeichnet, dass**
dem inspizierten Behältnis und/oder dem inspizierten Kunststoffvorformling wenigstens ein und bevorzugt die Arbeitsparameter zugeordnet werden, mittels denen dieses Behältnis und/oder dieser Kunststoffvorformling behandelt wurde.

9. Verfahren nach wenigstens einem der vorangegangenen Ansprüche,
**dadurch gekennzeichnet, dass**
ein Modell erstellt wird, welches Produktionsdaten (Arbeitsparameter und/oder Umgebungsdaten und/oder Messdaten) und den Wert, der für eine physikalische und insbesondere geometrische Eigenschaft des Tragrings des Kunststoffvorformlings charakteristisch ist, verbindet.

10. Verfahren nach Anspruch 8,
**dadurch gekennzeichnet, dass**
die Arbeitsparameter basierend auf dem Modell angepasst und insbesondere vorab angepasst werden, um verbesserte Performancedaten und/oder verbesserte Qualitäten des Tragrings zu erreichen.

11. Verfahren nach wenigstens einem der vorangegangenen Ansprüche,
**dadurch gekennzeichnet, dass**
eine Vielzahl von Behältnissen inspiziert wird und aus den bei diesen Inspektionen ermittelten Messwerten ein Modell zur Steuerung der Behandlungseinrichtung und insbesondere der Erwärmungseinrichtung und/oder der Umformungseinrichtung abgeleitet wird.

12. Verfahren nach wenigstens einem der vorangegangenen Ansprüche,
**dadurch gekennzeichnet, dass**
wenigstens ein Sollwert oder Referenzwert bestimmt wird und bevorzugt dieser Wert mit dem von der Inspektionseinrichtung ermittelten Wert verglichen wird.

13. Vorrichtung (1) zum Herstellen von Kunststoffbehältnissen (15) mit einer Transporteinrichtung, welche dazu geeignet und bestimmt ist Kunststoffvorformlinge (10) entlang eines vorgegebenen Transportpfads zu transportieren wobei diese Kunststoffvorformlinge einen Grundkörper (10a), eine Mündung (10b) und einen Tragring (10c) aufweisen und mit einer Erwärmungseinrichtung (25), welche dazu geeignet und bestimmt ist, die Grundkörper (10a) der Kunststoffvorformlinge (10) zu erwärmen und mit einer Umformungseinrichtung (2) zum Umformen von Kunststoffvorformlingen (10) zu Kunststoffbehältnissen (15), welche dazu geeignet und bestimmt ist die erwärmten Kunststoffvorformlinge durch Beaufschlagung mit einem fließfähigen und insbesondere gasförmigen Medium zu den Kunststoffbehältnissen (15) umzuformen, **dadurch gekennzeichnet, dass**
eine Inspektionseinrichtung (9, 13) vorgesehen ist, welche dazu geeignet und bestimmt ist wenigstens einen Wert zu bestimmen, der für wenigstens eine physikalische und insbesondere geometrische Eigenschaft des Tragrings (10c) eines Kunststoffvorformlings (10) und/oder eines Kunststoffbehältnisses (15) charakteristisch ist und eine Steuerungseinrichtung vorgesehen ist, welche dazu geeignet und bestimmt ist unter Berücksichtigung dieses Wertes wenigstens einen Behandlungsparameter der Erwärmungseinrichtung und/oder der Umformungseinrichtung zu steuern.

14. Vorrichtung nach dem vorangegangenen Anspruch,
**dadurch gekennzeichnet, dass**
die Vorrichtung wenigstens eine Sensoreinrichtung aufweist, welche dazu geeignet und bestimmt ist, wenigstens einen für den Betrieb der Erwärmungseinrichtung und/oder den Betrieb der Umformungseinrichtung charakteristischen Wert und insbesondere einen Umgebungswert zu messen und bevorzugt die Erwärmungseinrichtung (25) und/oder die Umformungseinrichtung (2) unter Berücksichtigung dieses Wertes steuerbar ist.

15. Vorrichtung nach wenigstens einem der vorangegangenen Ansprüche,
**dadurch gekennzeichnet, dass**
die Vorrichtung eine Verschließeinrichtung zum Verschließen der Behältnisse aufweist und die Inspektionseinrichtung in einer Transportrichtung der Kunststoffbehältnisse nach dieser Verschließeinrichtung angeordnet ist.

16. Vorrichtung nach wenigstens einem der vorangegangenen Ansprüche,
**dadurch gekennzeichnet, dass**
die Vorrichtung eine Vergleichseinrichtung aufweist, welche dazu geeignet und bestimmt ist, den Wert mit einem Sollwert und/oder Referenzwert zu vergleichen.

## Claims

1. A method for producing plastic containers (15), wherein plastic preforms (10) are transported along a predetermined transport path, and these plastic preforms have a main body (10a), a mouth (10b), and a support ring (10c), and the main bodies (10a) of the plastic preforms are heated using at least one heating device (25), and, subsequently, the heated plastic preforms (10) are transported to a forming device (2) for forming plastic preforms (10) into plastic containers (15) and are formed into the plastic containers (15) by applying a flowable medium,
**characterized in that**
at least one value is determined using an inspection device (9, 13), which value is characteristic of at least one physical and in particular geometric property of a support ring of a plastic preform and/or of a support ring of a plastic container, and at least one treatment parameter of the heating device (25) and/or of the forming device (2) is controlled taking this value into account.

2. The method according to claim 1,
**characterized in that**
the manufactured plastic containers are filled with a flowable medium and subsequently closed with a container closure, wherein the inspection by the inspection device preferably takes place after closing the container.

3. The method according to claim 1,
**characterized in that**
the value characteristic of at least one physical property of a support ring (10c) of a plastic preform (10) and/or of a plastic container is selected from a group of values characteristic of that include a direction of extension of the support ring relative to a longitudinal direction of the plastic preform, a wall thickness of the support ring, a curvature of the support ring, a concentricity of the support ring in relation to an axis of symmetry of the plastic preform, a distance of the support ring to a closure arranged on the plastic preform, a distance between the support ring and a thread of the plastic preform, a distance between a reference point on the plastic container, in particular the support ring and a further reference point, wherein the further reference point is arranged in particular on the plastic container or on the container closure, and the like.

4. The method according to at least one of the preceding claims,
**characterized in that**
the inspection device (9, 13) has at least one image-recording device that records at least one image of a plastic container and in particular a closed container or a plastic preform (10) to be inspected, in order to determine said value.

5. The method according to at least one of the preceding claims,
**characterized in that**
a closure is arranged on at least one plastic container (10), wherein this closure is preferably screwed on to a thread of the plastic container and preferably the plastic container (10) fitted with a closure is inspected and at least one value is detected which is characteristic of a geometric relationship between the plastic container and the closure arranged on the plastic container, wherein this geometric relationship is preferably a geometric relationship of at least a section of the closure or the plastic container to the support ring of the plastic container.

6. The method according to at least one of the preceding claims,
**characterized in that**
at least one value characteristic of the operation of the heating device and/or the operation of the forming device and in particular an ambient value is measured and preferably the heating device (25) and/or the forming device (2) is controlled taking this value into account.

7. The method according to the preceding claim,
**characterized in that**
the characteristic ambient value is selected from a group of values which is an ambient temperature, an air humidity, an air pressure, a temperature of the plastic preforms prior to their heating, a temperature of the plastic preforms after their heating, a temperature of the plastic preforms during their heating, a degree of absorption of the plastic preforms, in particular for infrared radiation, a temperature profile of the plastic preforms with respect to their longitudinal direction and/or with respect to their circumferential direction, and the like.

8. The method according to at least one of the preceding claims,
**characterized in that**
at least one working parameter and preferably the working parameters is/are assigned to the inspected container and/or the inspected plastic preform, by which this container and/or this plastic preform was treated.

9. The method according to at least one of the preceding claims,
**characterized in that**
a model is created which combines production data (working parameters and/or ambient data and/or measurement data) and the value characteristic of a physical and in particular geometric property of the support ring of the plastic preform.

10. The method according to claim 8,
**characterized in that**
the working parameters are adjusted an in particular adjusted in advance based upon the model, in order to achieve improved performance data and/or improved qualities of the support ring.

11. The method according to at least one of the preceding claims, **characterized in that**
a plurality of containers are inspected, and a model for controlling the treatment device and in particular the heating device and/or the forming device is derived from the measurement values determined during these inspections.

12. The method according to at least one of the preceding claims,
**characterized in that**
at least one target value or reference value is determined and preferably compared with the value determined by the inspection device.

13. An apparatus (1) for producing plastic containers (15), having a transport device that is suitable and intended for transporting plastic preforms (10) along a predetermined transport path, wherein these plastic preforms have a main body (10a), a mouth (10b), and a support ring (10c), and having a heating device (25) that is suitable and intended for heating the main bodies (10a) of the plastic preforms (10), and having a forming device (2) for forming plastic preforms (10) into plastic containers (15), which is suitable and intended for forming the heated plastic preforms into the plastic containers (15) by applying a flowable and in particular gaseous medium,
**characterized in that**
an inspection device (9, 13) is provided which is suitable and intended for determining at least one value that is characteristic of at least one physical and in particular geometric property of the support ring (10c) of a plastic preform (10) and/or of a plastic container (15), and a control device is provided which is suitable and intended for controlling at least one treatment parameter of the heating device and/or of the forming device, taking this value into account.

14. The apparatus according to the preceding claim,
**characterized in that**
the apparatus has at least one sensor device that is suitable and intended for measuring at least one value and in particular an ambient value, characteristic of the operation of the heating device (25) and/or the operation of the forming device (2) and that the heating device (25) and/or forming device (2) is preferably can be controlled taking this value into account.

15. The apparatus according to at least one of the preceding claims,
**characterized in that**
the apparatus has a closing device for closing the containers, and the inspection device is arranged downstream of this closing device in a transport direction of the plastic containers.

16. The apparatus according to at least one of the preceding claims,
**characterized in that**
the apparatus has a comparison device that is suitable and intended for comparing the value with a target value and/or reference value.

## Revendications

1. Procédé de fabrication de récipients en matière plastique (15), dans lequel des préformes en matière plastique (10) sont transportées le long d'un trajet de transport prédéfini et ces préformes en matière plastique présentent un corps de base (10a), une embouchure (10b) et une bague support (10c) et les corps de base (10a) des préformes en matière plastique sont chauffés au moyen d'au moins un dispositif de chauffage (25), et les préformes en matière plastique (10) chauffées sont ensuite transportées vers un dispositif de formage (2) pour le formage de préformes en matière plastique (10) en récipients en matière plastique (15) et sont formées par alimentation en un milieu fluide en récipients en matière plastique (15), **caractérisé en ce que**
au moins une valeur est déterminée au moyen d'un dispositif d'inspection (9, 13), laquelle est caractéristique d'au moins une propriété physique et notamment géométrique d'une bague support d'une préforme en matière plastique et/ou d'une bague support d'un récipient en matière plastique et au moins un paramètre de traitement du dispositif de chauffage (25) et/ou du dispositif de formage (2) est commandé en tenant compte de cette valeur.

2. Procédé selon la revendication 1,
**caractérisé en ce que**
les récipients en matière plastique fabriqués sont remplis d'un milieu fluide et ensuite fermés par un bouchon de récipient, dans lequel l'inspection a de préférence lieu avec le dispositif d'inspection après la fermeture du récipient.

3. Procédé selon la revendication 1,
**caractérisé en ce que**
la valeur qui est caractéristique d'au moins une propriété physique d'une bague support (10c) d'une préforme en matière plastique (10) et/ou d'un récipient en matière plastique, est choisie parmi un groupe de valeurs qui est caractéristique d'une direction d'étirement de la bague support par rapport à une direction longitudinale de la préforme en matière plastique, d'une épaisseur de paroi de la bague support, d'une courbure de la bague support, d'une concentricité de la bague support par rapport à un axe de symétrie de la préforme en matière plastique, d'une distance de la bague support par rapport à une fermeture disposée sur la préforme en matière plastique, d'une distance de la bague support par rapport à un filetage de la préforme en matière plastique, d'une distance entre un point de référence sur le récipient en matière plastique, en particulier la bague support et un autre point de référence, dans lequel l'autre point de référence est disposé en particulier sur le récipient en matière plastique ou sur la fermeture de récipient et contient des éléments similaires.

4. Procédé selon au moins l'une quelconque des revendications précédentes,
**caractérisé en ce que**
le dispositif d'inspection (9, 13) présente au moins un dispositif d'acquisition d'images qui capture au moins une image d'un récipient en matière plastique et en particulier d'un récipient fermé ou d'une préforme en matière plastique (10) à inspecter pour déterminer ladite valeur.

5. Procédé selon au moins l'une quelconque des revendications précédentes,
**caractérisé en ce que**
un bouchon est disposé sur au moins un récipient en matière plastique (10), dans lequel ce bouchon est de préférence vissé sur un filetage du récipient en matière plastique et de préférence, le récipient en matière plastique (10) pourvu du bouchon est inspecté et au moins une valeur qui est caractéristique d'un rapport géométrique entre le récipient en matière plastique et le bouchon disposé sur le récipient en matière plastique, est détectée, dans lequel ce rapport géométrique est de préférence un rapport géométrique d'au moins une section du bouchon ou du récipient en matière plastique par rapport à la bague support du récipient en matière plastique.

6. Procédé selon au moins l'une quelconque des revendications précédentes,
**caractérisé en ce que**
au moins une valeur caractéristique du fonctionnement du dispositif de chauffage et/ou du fonctionnement du dispositif de formage et en particulier une valeur ambiante est mesurée et le dispositif de chauffage (25) et/ou le dispositif de formage (2) est de préférence commandé en tenant compte de cette valeur.

7. Procédé selon la revendication précédente,
**caractérisé en ce que**
la valeur ambiante caractéristique est sélectionnée dans un groupe de valeurs qui comprend une température ambiante, une humidité de l'air, une pression d'air, une température des préformes en matière plastique avant leur chauffage, une température des préformes en matière plastique après leur chauffage, une température des préformes en matière plastique pendant leur chauffage, un degré d'absorption des préformes en matière plastique, notamment pour le rayonnement infrarouge, un profil de température des préformes en matière plastique par rapport à leur direction longitudinale et/ou par rapport à leur direction circonférentielle et similaires.

8. Procédé selon au moins l'une quelconque des revendications précédentes,
**caractérisé en ce que**
au moins un et de préférence les paramètres de travail, au moyen desquels ce récipient et/ou cette préforme en matière plastique a été traité(e), sont affectés au récipient inspecté et/ou à la préforme en matière plastique inspectée.

9. Procédé selon au moins l'une quelconque des revendications précédentes,
**caractérisé en ce que**
un modèle est créé, lequel relie des données de production (paramètres de travail et/ou données ambiantes et/ou données de mesure) et la valeur qui est caractéristique d'une propriété physique et notamment géométrique de la bague support de la préforme en matière plastique.

10. Procédé selon la revendication 8,
**caractérisé en ce que**
les paramètres de travail sont adaptés sur la base du modèle et, en particulier, adaptés à l'avance afin d'obtenir de meilleures données de performance et/ou de meilleures qualités de la bague support.

11. Procédé selon au moins l'une quelconque des revendications précédentes,
**caractérisé en ce que**
une pluralité de récipients est inspectée et un modèle de commande du dispositif de traitement et notamment du dispositif de chauffage et/ou du dispositif de formage est dérivé des valeurs de mesure déterminées lors de ces inspections.

12. Procédé selon au moins l'une quelconque des revendications précédentes,
**caractérisé en ce que**
au moins une valeur de consigne ou valeur de référence est déterminée et cette valeur est de préférence comparée à la valeur déterminée par le dispositif d'inspection.

13. Dispositif (1) de fabrication de récipients en matière plastique (15) avec un dispositif de transport qui est approprié et destiné à transporter des préformes en matière plastique (10) le long d'un trajet de transport prédéfini, dans lequel ces préformes en matière plastique présentent un corps de base (10a), une embouchure (10b) et une bague support (10c) et avec un dispositif de chauffage (25) qui est approprié et destiné à chauffer les corps de base (10a) des préformes en matière plastique (10) et avec un dispositif de formage (2) pour le formage de préformes en matière plastique (10) en récipients en matière plastique (15) qui est approprié et destiné à former les préformes en matière plastique chauffées par alimentation en un milieu fluide et notamment gazeux en récipients en matière plastique (15),
**caractérisé en ce que**
un dispositif d'inspection (9, 13) est prévu, lequel est approprié et destiné à déterminer au moins une valeur qui est caractéristique d'au moins une propriété physique et notamment géométrique de la bague support (10c) d'une préforme en matière plastique (10) et/ou d'un récipient en matière plastique (15) et un dispositif de commande est prévu, lequel est approprié et destiné à commander au moins un paramètre de traitement du dispositif de chauffage et/ou du dispositif de formage en tenant compte de cette valeur.

14. Dispositif selon la revendication précédente,
**caractérisé en ce que**
le dispositif présente au moins un dispositif capteur qui est approprié et destiné à mesurer au moins une valeur caractéristique du fonctionnement du dispositif de chauffage et/ou du fonctionnement du dispositif de formage et en particulier une valeur ambiante et le dispositif de chauffage (25) et/ou le dispositif de formage (2) peut être de préférence commandé en tenant compte de cette valeur.

15. Dispositif selon au moins l'une quelconque des revendications précédentes,
**caractérisé en ce que**
le dispositif présente un dispositif de fermeture pour fermer les récipients et le dispositif d'inspection est disposé dans une direction de transport des récipients en matière plastique après ce dispositif de fermeture.

16. Dispositif selon au moins l'une quelconque des revendications précédentes,
**caractérisé en ce que**
le dispositif présente un dispositif de comparaison qui est approprié et destiné à comparer la valeur à une valeur de consigne et/ou valeur de référence.
